# EUROPÄISCHE PATENTSCHRIFT

(11) **EP 4 097 369 B1**
(45) Veröffentlichungstag und Bekanntmachung des Hinweises auf die Patenterteilung: **07.02.2024**
(21) Anmeldenummer: 20820337.2
(22) Anmeldetag: 01.12.2020
(51) Int. Cl.: F16C 35/063, F16C 25/06, F16H 57/08, F16C 19/44

(54) **LAGERANORDNUNG, AUFWEISEND EINE WELLE, EIN ERSTES LAGER UND EINE MUTTER**
BEARING ASSEMBLY COMPRISING A SHAFT, A FIRST BEARING AND A NUT
ENSEMBLE PALIER COMPRENANT UN ARBRE, UN PREMIER PALIER ET UN ÉCROU

(30) Priorität: 28.01.2020 DE 102020000523
(43) Veröffentlichungstag der Anmeldung: 07.12.2022
(73) Patentinhaber: SEW-EURODRIVE GmbH & Co. KG, 76646 Bruchsal (DE)
(72) Erfinder: LAMAJ, Ermalt, 68161 Mannheim (DE); BLÖMEKE, Jens, 64560 Riedstadt (DE); SCHNEIDER, Norbert, 64668 Rimbach (DE); HUBER, Thomas, 76199 Karlsruhe (DE); LUTZ, Markus, 68794 Oberhausen-Rheinhausen (DE); WURZER, Sven, 76676 Graben-Neudorf (DE)
(74) Vertreter: Tüngler, Eberhard
(86) Internationale Anmeldenummer: PCT/EP2020/025553
(87) Internationale Veröffentlichungsnummer: WO 2021/151455

(56) Entgegenhaltungen:
- DE-A1- 10 325 781
- DE-A1-102007 010 314
- DE-B4- 10 207 396
- US-A- 2 836 473
- US-A- 4 966 474
- US-A1- 2010 247 016
- US-B2- 9 618 050

## Beschreibung

Die Erfindung betrifft eine Lageranordnung, aufweisend eine Welle, ein erstes Lager und eine Mutter.

Es ist allgemein bekannt, dass eine Welle über Lager drehbar lagerbar ist.

**Aus der** US 49 66 474 A **ist als nächstliegender Stand der Technik** eine fixierbare Lagervorspannungsanordnung **bekannt.**

**Aus der** US 28 36 473 A **ist eine Lageranordnung bekannt.**

**Aus der** US 49 66 474 A **ist** ein Getriebe mit Lagervorspannungsanordnung **bekannt.**

**Aus der** US 96 18 050 B2 **ist eine Anordnung zur Befestigung eines Antriebsritzels bekannt.**

**Aus der** US 2010/0 247 016 A1 **ist ein mehrteiliges Beabstandungselement für das Einstellen der Lagervorspannung bekannt.**

**Aus der** DE 10 2007 010 314 A1 **ist ein Verfahren zum Herstellen und Montieren von Lagereinrichtungen bekannt.**

**Aus der** DE 103 25 781 A1 **ist ein Umlaufgetriebe bekannt.**

**Aus der** US 29 36 655 A **ist ein selbstausrichtendes Planetengetriebe bekannt.**

**Aus der** DE 197 13 211 A1 **ist eine Lagervorrichtung für eine Achse bekannt.**

**Aus der** GB 20 27 134 A **ist eine axial adjustierbare Lageranordnung bekannt.**

Der Erfindung liegt daher die Aufgabe zugrunde, eine Lageranordnung mit einer verlängerten Standzeit auszubilden.

Erfindungsgemäß wird die Aufgabe bei der Lageranordnung nach den in Anspruch 1 angegebenen Merkmalen gelöst.

Wichtige Merkmale der Erfindung bei der Lageranordnung sind, dass die Lageranordnung, eine Welle, ein erstes Lager und eine Mutter, insbesondere Wellenmutter, aufweist,
wobei die Mutter ein Gewinde, insbesondere Innengewinde, aufweist, das auf einen an der Welle ausgebildeten Gewindebereich aufgeschraubt ist, insbesondere welcher ein Außengewinde aufweist,
wobei ein an der Welle ausgebildeter Lagersitz an den Gewindebereich angrenzt,
wobei der Innenring des ersten Lagers den Lagersitz berührt, insbesondere wobei der Innenring des ersten Lagers auf den Lagersitz aufgesteckt ist,
wobei die Mutter den Innenring des ersten Lagers berührt,
wobei der Innenring des ersten Lagers von dem Gewindebereich der Welle beabstandet angeordnet ist,
wobei ein Auslaufbereich eines in den Gewindebereich der Welle eingeschnittenen Gewindes in einem an den Gewindebereich angrenzenden Teilbereich des Lagersitzes angeordnet ist.

Von Vorteil ist dabei, dass die Mutter mittels Schraubverbinden eine axiale Festlegung und mittels eines am Auslaufbereich anliegenden Passsitzes eine radiale Zentrierung ermöglicht. Denn dadurch, dass der Auslaufbereich des Gewindes des Gewindebereichs in den Lagersitz hineinragt, ist ermöglicht, dass ein an der Mutter ausgebildeter innenzylindrischer Passsitz aufgesteckt wird auf den Auslaufbereich und sich somit in radialer Richtung zentriert. Somit ist schon beim Aufschrauben der Mutter auf die Welle ein axiales und radiales Festlegen erreichbar und weder in axialer noch in radialer Richtung ein Spiel wirksam. Auf diese Weise ist eine verbesserte Rundlaufgenauigkeit erreichbar. Letzteres ist beispielsweise besonders wichtig bei Planetengetrieben.

Bei einer vorteilhaften Ausgestaltung ist der Lagersitz als fein bearbeitete, insbesondere mit Schleifen bearbeitete, zylindrische, insbesondere außenzylindrische, Fläche ausgeführt,
insbesondere welche nur durch eine im Auslaufbereich auslaufende Vertiefung unterbrochen ist. Von Vorteil ist dabei, dass der Lagersitz mit sehr hoher Genauigkeit fertigbar ist und die Mutter mittels des innenzylindrischen Passsitzes sehr genau an diesem Passsitz zentrierbar ist.

Bei einer vorteilhaften Ausgestaltung drückt die Mutter gegen den Innenring des ersten Lagers. Von Vorteil ist dabei, dass das erste Lager vorgespannt ist und somit die Lagerluft reduzierbar ist.

Bei einer vorteilhaften Ausgestaltung deckt der Lagersitz in axialer Richtung, insbesondere also in Richtung der Drehachse der Welle, einen größeren Bereich ab als der Innenring des ersten Lagers,
insbesondere wobei der Lagersitz in axialer Richtung weiter ausgedehnt ist als der Berührbereich zwischen Lagersitz und Innenring des ersten Lagers. Von Vorteil ist dabei, dass der Bereich der hochgenauen Bearbeitung der Welle nicht nur die axiale Breite des Innenrings aufweist, sondern breiter ist.

**Erfindungsgemäß** weist die Mutter einen an das Gewinde der Mutter angrenzenden innenzylindrisch ausgebildeten Bereich, insbesondere Passsitz, auf, wobei der Bereich den Lagersitz, insbesondere den Auslaufbereich, berührt, insbesondere auf ihn aufgesteckt und/oder aufgepresst ist. Von Vorteil ist dabei, dass die Mutter hochgenau an der Welle zentrierbar ist und somit auch zum am Lagersitz zentrierten Innenring ausgerichtet ist.

Bei einer vorteilhaften Ausgestaltung weist die Mutter an ihrem zur Welle hin gerichtet angeordneten Kantenbereich eine in Umfangsrichtung umlaufende Fase auf. Von Vorteil ist dabei, dass ein Einfädeln der Mutter beim Aufstecken der Mutter auf die Welle einfacher ausführbar ist.

Bei einer vorteilhaften Ausgestaltung ist der größte lichte Innendurchmesser der Mutter im Bereich ihres Gewindes kleiner oder gleich zu dem lichten Innendurchmesser des an das Gewinde der Mutter angrenzenden innenzylindrisch ausgebildeten Bereichs, insbesondere Passsitzes. Von Vorteil ist dabei, dass das Gewinde der Mutter keinen Auslauf benötigt im Bereich des Passsitzes der Mutter.

Bei einer vorteilhaften Ausgestaltung ist der Außenring des ersten Lagers in einem Gehäuse aufgenommen,
wobei ein Außenring eines zweiten Lagers im Gehäuse aufgenommen ist. Von Vorteil ist dabei, dass die Welle drehbar zum Gehäuse gelagert ist.

Bei einer vorteilhaften Ausgestaltung ist der Außenring des ersten Lagers gegen eine Stufe des Gehäuses angestellt,
wobei der Außenring des zweiten Lagers gegen eine Stufe des Gehäuses angestellt ist. Von Vorteil ist dabei, dass die beiden Stufen spiegelsymmetrisch zueinander angeordnet sind. In axialer Richtung ist also die erste der beiden Stufen ansteigend und zwar nach radial innengerichtet und die zweite der beiden Stufen absteigend, also nach radial außen gerichtet absteigend.

Axial zwischen den beiden Stufen ist also eine radial gerichtete Verengung des Gehäuses vorgesehen. In diesem Bereich zwischen den beiden Stufen ist eine Innenverzahnung am Gehäuse oder an einem mit dem Gehäuse drehfest verbundenen Hohlrad ausführbar, welche im Eingriff steht mit auf Bolzen gelagerten Planetenrädern, wobei die Bolzen mit der Welle steckverbunden oder einstückig, insbesondere einteilig, ausgeführt sind.

Bei einer vorteilhaften Ausgestaltung ist das Gehäuse einteilig ausgeführt, wobei eine Innenverzahnung am Gehäuse ausgebildet ist. Von Vorteil ist dabei, dass eine einfache Herstellung ermöglicht ist.

Bei einer vorteilhaften Ausgestaltung ist das Gehäuse mehrteilig ausgeführt, wobei das Gehäuse ein Hohlrad mit Innenverzahnung aufweist. Von Vorteil ist dabei, dass das Hohlrad aus einem anderen Werkstoff, insbesondere ADI, ausführbar ist als das vorzugsweise aus einem Grauguss hergestellte Gehäuse.

Bei einer vorteilhaften Ausgestaltung ist der Innenring des zweiten Lagers auf die Welle aufgesteckt ist,
insbesondere wobei der Innenring des zweiten Lagers gegen eine an der Welle ausgebildete Stufe angestellt ist. Von Vorteil ist dabei, dass das zweite Lager an der Welle aufgenommen ist.

Bei einer vorteilhaften Ausgestaltung sind diejenigen am Gehäuse ausgebildeten Stufen, gegen welche die Außenringe der beiden Lager angestellt, in axialer Richtung zwischen dem ersten und dem zweiten Lager angeordnet sind,
wobei das zweite Lager in axialer Richtung zwischen dem ersten Lager und derjenigen an der Welle ausgebildeten Stufe angeordnet ist, gegen welche der Innenring des zweiten Lagers angestellt ist. Von Vorteil ist dabei, dass das Gehäuse einfach herstellbar ist.

Bei einer vorteilhaften Ausgestaltung ist das erste Lager in axialer Richtung zwischen der Mutter und dem zweiten Lager angeordnet. Von Vorteil ist dabei, dass die Mutter einen geschlossenen Kraftfluss erzeugt, der durch die beiden Lager fließt.

Bei einer vorteilhaften Ausgestaltung ist der an der Mutter ausgebildete innenzylindrische Bereich in axialer Richtung zwischen dem Gewinde der Mutter und dem Innenring des ersten Lagers angeordnet. Von Vorteil ist dabei, dass eine hochgenaue Zentrierung ermöglicht ist. Bei einer vorteilhaften Ausgestaltung ist der an der Welle ausgebildete Lagersitz in axialer Richtung zwischen dem Gewindebereich der Welle und dem zweiten Lager angeordnet. Von Vorteil ist dabei, dass eine Zentrierung mittels des Passsitzes ermöglicht ist und somit die Rundlaufgenauigkeit der Welle verbesserbar ist.

Bei einer vorteilhaften Ausgestaltung ist die Welle ein Planetenträger, in welchem Planetenbolzen aufgenommen und/oder verbunden sind, auf welchen Planetenräder insbesondere mittels auf die Planetenbolzen aufgesteckter Lager, insbesondere Nadellager, aufgesteckt und drehbar gelagert sind,
wobei die Verzahnungen der Planetenräder einerseits mit der Innenverzahnung im Eingriff sind und andererseits mit einer als Sonnenradverzahnung fungierenden Verzahnung eines drehbar angeordneten Teils, insbesondere Sonnenrads. Von Vorteil ist dabei, dass der Planetenträger eine hohe Rundlaufgenauigkeit, insbesondere bei abtriebsseitigem Flanschblockabtrieb, erreicht. Somit ist auch die Standzeit des Getriebes, insbesondere der beiden Lager, insgesamt verlängert.

**Erfindungsgemäß** weist die Mutter einen zweiten innenzylindrischen Bereich auf, welcher an das Gewinde der Mutter angrenzt und auf der vom ersten innenzylindrisch ausgebildeten Bereich abgewandten Seite des Gewindes der Mutter angeordnet ist,
insbesondere wobei der zweite innenzylindrische Bereich einen kleineren lichten Innendurchmesser aufweist als der kleinste lichte Innendurchmesser des Gewindes der Mutter aufweist und/oder auf einen zweiten außenzylindrischen Bereich der Welle aufgepresst ist, welcher an den Gewindebereich der Welle angrenzt und einen kleineren Außendurchmesser aufweist als der größte Außendurchmesser des Gewindebereichs der Welle. Von Vorteil ist dabei, dass die Mutter beidseitig zentriert ist und somit die Rundlaufgenauigkeit weiter verbessert ist.

Weitere Vorteile ergeben sich aus den Unteransprüchen. Die Erfindung ist auf die Merkmalskombination der beigefügten Ansprüche beschränkt.

Die Erfindung wird nun anhand von schematischen Abbildungen näher erläutert:

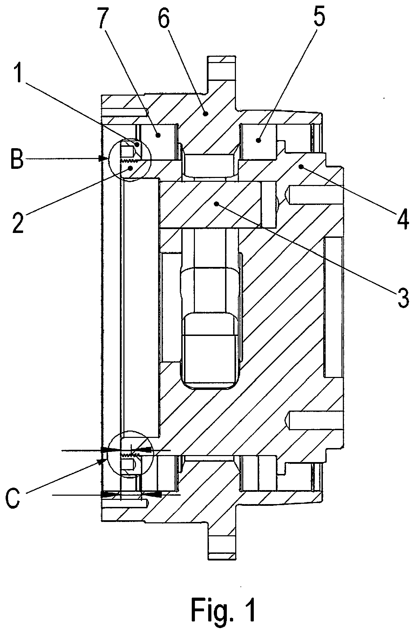

In der Figur 1 ist eine erfindungsgemäße Lageranordnung für ein Planetengetriebe im Querschnitt dargestellt.

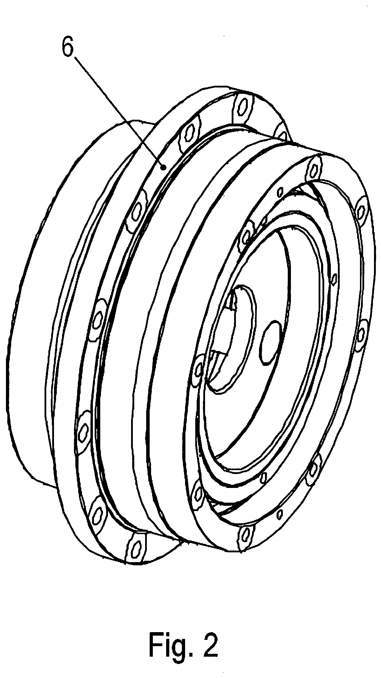

In der Figur 2 ist eine zugehörige Schrägansicht dargestellt.

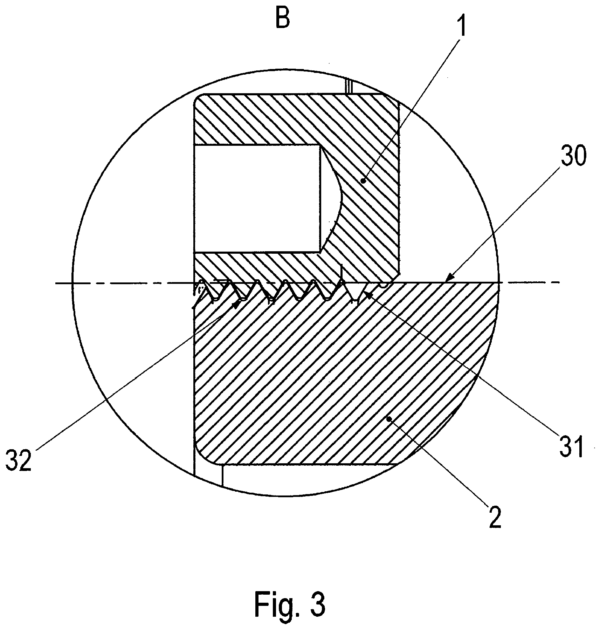

In der Figur 3 ist ein mit B gekennzeichneter Bereich der Figur 1 vergrößert dargestellt.

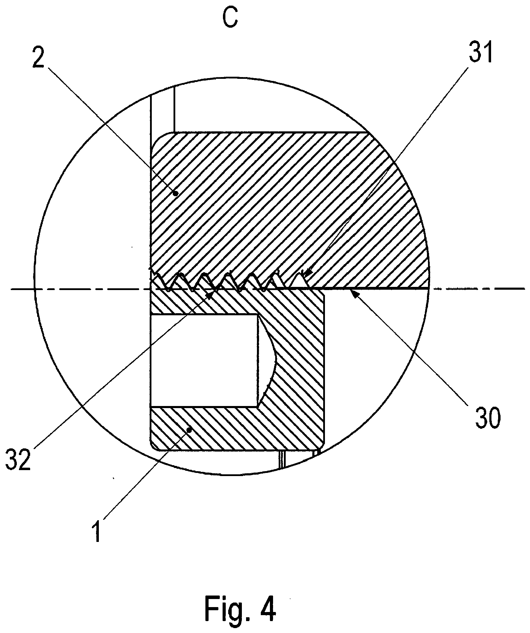

In der Figur 4 ist ein mit C gekennzeichneter Bereich der Figur 1 vergrößert dargestellt.

Wie in den Figuren dargestellt, weist die Lageranordnung in einem Gehäuseteil, insbesondere Gehäuse 6 mit Hohlrad, aufgenommene Lager (5, 7) zur Lagerung einer Welle auf. Die Welle ist beispielhaft als Planetenträger 2 zusammen mit einer zweiten Wange 4 des Planetenträgers 2 ausgeführt.

Hierbei sind die zweite Wange 4 und der Planetenträger 2 drehfest verbunden, insbesondere als ein einziges Stück, also einstückig, insbesondere also einteilig, ausgeführt oder als zwei miteinander verbundene Teile, insbesondere also zweistückig.

Ein jeweiliger Planetenbolzen 3 ist sowohl in eine Bohrung des Planetenträgers 2 als auch in eine Bohrung der zweiten Wange 4 eingepresst.

Mittels einer auf ein Außengewinde der Welle aufgeschraubten Mutter 1, insbesondere Wellenmutter, ist ein erstes Lager 7 vorgespannt. Hierbei drückt die Mutter 1 den auf der Welle, insbesondere Planetenträger 2, aufgesteckten Innenring des ersten Lagers 7 in axialer Richtung zum zweiten Lager 5 hin. Dadurch wird die Welle in entgegengesetzter Richtung gezogen und somit der Innenring des auf der Welle, insbesondere auf der zweiten Wange 4, aufgesteckten zweiten Lagers 5 zum ersten Lager 7 hingedrückt. Die Außenringe der beiden Lager 5 und 7 liegen an einem Absatz des Gehäuses 6. Daher baut sich ein geschlossener Kraftfluss auf, der von der Mutter über den Planetenträger 2 samt zweiter Wange 4 sowie das zweite Lager 5, das Gehäuse 6 und das erste Lager 7 zurück zur Mutter 1 schließt.

Mittels der Mutter 1 sind somit beide Lager (5, 7) vorgespannt.

Beide Lager (5, 7=) sind vorzugsweise als Schräglager ausgeführt.

Im Gehäuse 6 ist ein Hohlrad mit Innenverzahnung aufgenommen oder das Hohlrad ist in dem Gehäuse 6 integriert ausgebildet, indem eine Innenverzahnung an der Innenseite des Gehäuses 6, insbesondere axial zwischen den beiden Absätzen, ausgebildet. Ist.

Die auf den Planetenbolzen 3 drehbar gelagert angeordneten Planetenräder sind einerseits mit der Innenverzahnung im Eingriff und andererseits mit der Verzahnung eines drehbar gelagerten Sonnenrads.

In den Figuren sind Sonnenrad und Planetenräder nicht dargestellt.

Die Mutter 1 ist besonders vorteilhaft, wenn die Planetengetriebestufe einen Flanschblockabtrieb aufweist. Denn in diesem Fall ist der Außendurchmesser des Planetenträgers 2 an der abtreibenden Seite sehr groß. Insbesondere umfasst der von der Mutter 1 überdeckte, auf die Drehachse des Planetenträgers 2 bezogene Radialabstandsbereich den vom Innenring des ersten Lagers 7 überdeckten Radialabstandsbereich oder zumindest überlappen die beiden Radialabstandsbereiche.

Bei der erfindungsgemäßen Lageranordnung weist die Welle 2, insbesondere der Planetenträger 2, einen fein bearbeiteten Lagersitz 30 auf, auf dem der Innenring des ersten Lagers 7 angeordnet ist. Allerdings ist dieser fein bearbeitete Lagersitz 30 in axialer Richtung weiter ausgedehnt als der vom Innenring des ersten Lagers 7 benötigte axiale Bereich.

An den Lagersitz 30 der Welle grenzt ein Gewindebereich 32, insbesondere Außengewindebereich, der Welle an, auf den die Mutter 1 mit ihrem Gewinde, insbesondere Innengewinde, aufgeschraubt ist.

Der Gewindebereich 32 ist vorzugsweise als Außengewindebereich ausgeführt.

Beim Herstellen des Gewindebereichs 32 wird ein Werkzeug, insbesondere Messer in axialer Richtung, insbesondere also in Richtung der Drehachse der Welle 2 bewegt, während das Werkzeug das Gewinde spanend herstellt. Am Ende des Gewindebereiches 32 grenzt zwar der fein bearbeitete, insbesondere also glatte, zylindrische Bereich des Lagersitzes 30 an; jedoch erzeugt das Werkzeug beim radialen Herausbewegen einen Auslaufbereich 31. Denn während des radial gerichteten Entfernens des Werkzeugs wird die Welle noch in Umfangsrichtung um ihre Drehachse gedreht, so dass ein auslaufender Gewindegang im Auslaufbereich 31 entsteht. Dabei nimmt die radial Tiefe des Gewindegangs, also der schraubenförmigen Einkerbung des Gewindebereichs 32, mit zunehmendem axialen Abstand vom Gewindebereich 32 ab. Der kleinste Radialabstand des Gewindegangs ist also im Auslaufbereich 31 mit zunehmendem axialen Abstand vom Gewindebereich 32 eine streng monoton zunehmende Funktion, bis dieser kleinste Radialabstand den Außenradius des Lagersitzes 30 erreicht. Axial beabstandet vom Gewindebereich 32 und vom Auslaufbereich 31 ist der Innenring des Lagers 7 angeordnet. Der Auslaufbereich 31 ist vom ansonsten fein bearbeiteten Lagersitz 30 umfasst, weil der Lagersitz 30 axial weiter ausgedehnt ist als der Innenring des Lagers 7 und vor dem Schneiden des Gewindebereichs 32 schon gefertigt ist.

Obwohl das Rohteil der Welle nur im Bereich des Lagersitzes 30 fein bearbeitet ist, insbesondere also auch im Bereich des später hergestellten Auslaufbereichs 31, ist das Rohteil in demjenigen Bereich, in welchem später der Gewindebereich 32 hergestellt wird, nur grob bearbeitet, insbesondere also mit Drehen spanend bearbeitet. Nach Herstellen des Gewindebereichs 32 ist der maximale Radialabstand im Gewindebereich 32 kleiner als die Hälfte des Außendurchmessers des Lagersitzes 30. Denn auch die Bergspitzen zwischen den Vertiefungen des Gewindegangs werden beim Herstellen des Gewindebereichs 32 spanend bearbeitet.

Die Mutter 1 weist ein Innengewinde auf, mit welchem die Mutter 1 auf den Gewindebereich 32 der Welle aufgeschraubt ist. Dabei weist die Mutter 1 einen sich an ihren Innengewindebereich anschließenden fein bearbeiteten innenzylindrischen Bereich auf, der sich beim Einschrauben der Mutter 1 auf den Lagersitz 30, insbesondere Auslaufbereich 31, schiebt und somit eine radial gerichtete Zentrierung der Mutter 1 zur Welle, insbesondere Planetenträger 2, bewirkt.

Außerdem weist die Mutter an ihrem dem ersten Lager 7 zugewandten Endbereich eine in Umfangsrichtung umlaufende Fase auf. Somit ist ein Einfädeln beim Aufstecken auf die Welle erleichtert.

Erfindungsgemäß schließt sich an den Gewindebereich 32 auf der Welle kein Freistich an sondern an den Gewindebereich 32 ist der Auslaufbereich 31 angeschlossen.

Bei weiteren erfindungsgemäßen Ausführungsbeispielen wird die Mutter 1 nicht nur an ihrem dem ersten Lager 7 zugewandten Endbereich mit einem innenzylindrischen Bereich, insbesondere Passsitz, ausgeführt, sondern auch an ihrem vom erste Lager 7 abgewandten Endbereich. Somit grenzen an das Gewinde der Mutter 1 axial beidseitig zwei innenzylindrische Bereiche an, wobei der lichte Innendurchmesser des zweiten, also des vom ersten Lager weiter entfernt angeordneten innenzylindrischen Bereichs kleiner ist als der lichte Innendurchmesser des ersten innenzylindrischen Bereichs. Insbesondere ist er aber auch kleiner als der kleinste lichte Innendurchmesser des Gewindes der Mutter 1 und weist auch einen Auslaufbereich auf, der bei der Fertigung des Gewindes für das SchneidWerkzeug benötigt wird. Die Welle weist einen entsprechenden außenzylindrischen Bereich auf, der an den Gewindebereich 32 auf der vom Auslaufbereich 31 abgewandten Seite angrenzt und insbesondere ohne Auslaufbereich ausgeführt ist. Somit ist die Mutter mit beidseitigem Passsitz auf der Welle radial und axial spielfrei zentrierbar und eine noch weiter verbesserte Rundlaufgenauigkeit erreichbar. Insbesondere bei Ausführung der Welle als Planetenträger bewirkt dies eine Verbesserung der Standzeit des Planetengetriebes.

Bei weiteren erfindungsgemäßen Ausführungsbeispielen wird der Planetenträger 2 einwangig ausgeführt und ist somit über die beiden Lager 5 und 7 gelagert im Gehäuse 6. Dabei sind die Planetenbolzen vorzugsweise nur einseitig eingesteckt in jeweilige Bohrungen des Planetenträgers 2.

### Bezugszeichenliste

1 Mutter
2 Planetenträger
3 Planetenbolzen
4 zweite Wange des Planetenträgers
5 Lager
6 Gehäuse mit Hohlrad
7 Lager
30 Lagersitz
31 Auslaufbereich
32 Gewindebereich

## Patentansprüche

1. Lageranordnung, aufweisend eine Welle, ein erstes Lager (7) und eine Mutter (1), insbesondere Wellenmutter,
wobei die Mutter (1) ein Gewinde, insbesondere Innengewinde, aufweist, das auf einen an der Welle ausgebildeten Gewindebereich (32) aufgeschraubt ist, insbesondere welcher ein Außengewinde aufweist,
**wobei** ein an der Welle ausgebildeter Lagersitz (30) an den Gewindebereich (32) angrenzt,
wobei der Innenring des ersten Lagers den Lagersitz (30) berührt, insbesondere wobei der Innenring des ersten Lagers auf den Lagersitz (30) aufgesteckt ist,
wobei die Mutter (1) den Innenring des ersten Lagers berührt,
wobei der Innenring des ersten Lagers von dem Gewindebereich (32) der Welle beabstandet angeordnet ist,
wobei ein Auslaufbereich (31) eines in den Gewindebereich (32) der Welle eingeschnittenen Gewindes in einem an den Gewindebereich (32) angrenzenden Teilbereich des Lagersitzes angeordnet ist,
**dadurch gekennzeichnet, dass**
**die Mutter (1) einen an das Gewinde der Mutter (1) angrenzenden, ersten innenzylindrisch ausgebildeten Bereich, insbesondere Passsitz, aufweist, wobei der Bereich den Lagersitz (30), insbesondere den Auslaufbereich (31), berührt, insbesondere auf ihn aufgesteckt und/oder aufgepresst ist,**
**wobei die Mutter (1) einen zweiten innenzylindrischen Bereich aufweist, welcher an das Gewinde der Mutter (1) angrenzt und auf der vom ersten innenzylindrisch ausgebildeten Bereich abgewandten Seite des Gewindes der Mutter (1) angeordnet ist.**

2. Lageranordnung nach Anspruch 1,
**dadurch gekennzeichnet, dass**
der Lagersitz (30) als fein bearbeitete, insbesondere mit Schleifen bearbeitete, zylindrische, insbesondere außenzylindrische, Fläche ausgeführt ist,
insbesondere welche nur durch eine im Auslaufbereich (31) auslaufende Vertiefung unterbrochen ist.

3. Lageranordnung nach einem der vorangegangenen Ansprüche,
**dadurch gekennzeichnet, dass**
die Mutter (1) gegen den Innenring des ersten Lagers drückt.

4. Lageranordnung nach einem der vorangegangenen Ansprüche,
**dadurch gekennzeichnet, dass**
der Lagersitz (30) in axialer Richtung, insbesondere also in Richtung der Drehachse der Welle, einen größeren Bereich abdeckt als der Innenring des ersten Lagers,
insbesondere wobei der Lagersitz (30) in axialer Richtung weiter ausgedehnt ist als der Berührbereich zwischen Lagersitz (30) und Innenring des ersten Lagers.

5. Lageranordnung nach einem der vorangegangenen Ansprüche,
**dadurch gekennzeichnet, dass**
die Mutter (1) an ihrem zur Welle hin gerichtet angeordneten Kantenbereich eine in Umfangsrichtung umlaufende Fase aufweist.

6. Lageranordnung nach einem der vorangegangenen Ansprüche,
**dadurch gekennzeichnet, dass**
der größte lichte Innendurchmesser der Mutter (1) im Bereich ihres Gewindes kleiner oder gleich ist zu dem lichten Innendurchmesser des an das Gewinde der Mutter (1) angrenzenden innenzylindrisch ausgebildeten Bereichs, insbesondere Passsitzes.

7. Lageranordnung nach einem der vorangegangenen Ansprüche,
**dadurch gekennzeichnet, dass**
der Außenring des ersten Lagers in einem Gehäuse (6) aufgenommen ist,
wobei ein Außenring eines zweiten Lagers im Gehäuse (6) aufgenommen ist,
und/oder dass
der Außenring des ersten Lagers gegen eine Stufe des Gehäuses angestellt ist,
wobei der Außenring des zweiten Lagers gegen eine Stufe des Gehäuses angestellt ist.

8. Lageranordnung nach Anspruch 7,
**dadurch gekennzeichnet, dass**
das Gehäuse (6) einteilig ausgeführt ist, wobei eine Innenverzahnung am Gehäuse (6) ausgebildet ist,
oder dass
das Gehäuse (6) mehrteilig ausgeführt ist, wobei das Gehäuse (6) ein Hohlrad mit Innenverzahnung aufweist.

9. Lageranordnung nach einem der Ansprüche 7 bis 8,
**dadurch gekennzeichnet, dass**
der Innenring des zweiten Lagers auf die Welle aufgesteckt ist,
insbesondere wobei der Innenring des zweiten Lagers gegen eine an der Welle ausgebildete Stufe angestellt ist.

10. Lageranordnung nach einem der Ansprüche 7 bis 9,
**dadurch gekennzeichnet, dass**
diejenigen am Gehäuse (6) ausgebildeten Stufen, gegen welche die Außenringe der beiden Lager angestellt sind, in axialer Richtung zwischen dem ersten und dem zweiten Lager angeordnet sind,
wobei das zweite Lager (5) in axialer Richtung zwischen dem ersten Lager (7) und derjenigen an der Welle ausgebildeten Stufe angeordnet ist, gegen welche der Innenring des zweiten Lagers angestellt ist.

11. Lageranordnung nach einem der Ansprüche 7 bis 10,
**dadurch gekennzeichnet, dass**
das erste Lager (7) in axialer Richtung zwischen der Mutter (1) und dem zweiten Lager (5) angeordnet ist.

12. Lageranordnung nach einem der Ansprüche 7 bis 11,
**dadurch gekennzeichnet, dass**
der an der Mutter (1) ausgebildete innenzylindrische Bereich in axialer Richtung zwischen dem Gewinde der Mutter (1) und dem Innenring des ersten Lagers angeordnet ist,
und/oder dass
der an der Welle ausgebildete Lagersitz (30) in axialer Richtung zwischen dem Gewindebereich (32) der Welle und dem zweiten Lager (5) angeordnet ist.

13. Lageranordnung nach einem der Ansprüche 8 bis 12,
**dadurch gekennzeichnet, dass**
die Welle ein Planetenträger (2) ist, in welchem Planetenbolzen (3) aufgenommen und/oder verbunden sind, auf welchen Planetenräder insbesondere mittels auf die Planetenbolzen (3) aufgesteckter Lager, insbesondere Nadellager, aufgesteckt und drehbar gelagert sind,
wobei die Verzahnungen der Planetenräder einerseits mit der Innenverzahnung im Eingriff sind und andererseits mit einer als Sonnenradverzahnung fungierenden Verzahnung eines drehbar angeordneten Teils, insbesondere Sonnenrads.

14. Lageranordnung nach einem der vorangegangenen Ansprüche,
**dadurch gekennzeichnet, dass**
**der zweite innenzylindrische Bereich einen kleineren lichten Innendurchmesser aufweist als der kleinste lichte Innendurchmesser des Gewindes der Mutter (1) und/oder auf einen zweiten außenzylindrischen Bereich der Welle aufgepresst ist, welcher an den Gewindebereich (32) der Welle angrenzt und einen kleineren Außendurchmesser aufweist als der größte Außendurchmesser des Gewindebereichs (32) der Welle.**

## Claims

1. A bearing arrangement having a shaft, a first bearing (7) and a nut (1), in particular shaft nut,
wherein the nut (1) has a thread, in particular female thread, which is screwed onto a threaded region (32) formed at the shaft, in particular which threaded region has a male thread,
wherein a bearing seat (30) formed at the shaft adjoins the threaded region (32),
wherein the inner ring of the first bearing contacts the bearing seat (30), in particular wherein the inner ring of the first bearing is placed onto the bearing seat (30),
wherein the nut (1) contacts the inner ring of the first bearing,
wherein the inner ring of the first bearing is arranged spaced apart from the threaded region (32) of the shaft,
wherein a runout region (31) of a thread cut in the threaded region (32) of the shaft is arranged in a bearing seat partial region adjoining the threaded region (32),
**characterised in that**
the nut (1) has a first inner-cylindrical region, in particular press fit, adjoining the thread of the nut (1), wherein the region contacts the bearing seat (30), in particular the runout region (31), in particular is placed and/or pressed thereon,
wherein the nut (1) has a second inner-cylindrical region which adjoins the thread of the nut (1) and which is arranged at that side of the thread of the nut (1) remote from the first inner-cylindrical region.

2. A bearing arrangement according to claim 1,
**characterised in that**
the bearing seat (30) is a finely worked, in particular worked by grinding, and cylindrical, in particular outer-cylindrical, surface,
in particular which is only interrupted by a depression issuing in the runout region (31).

3. A bearing arrangement according to any one of the preceding claims,
**characterised in that**
the nut (1) presses against the inner ring of the first bearing.

4. A bearing arrangement according to any one of the preceding claims,
**characterised in that**
the bearing seat (30) covers in an axial direction, in particular therefore in the direction of the rotational axis of the shaft, a larger region than the inner ring of the first bearing,
in particular wherein the bearing seat (30) extends further in an axial direction than the contact region between bearing seat (30) and inner ring of the first bearing.

5. A bearing arrangement according to any one of the preceding claims,
**characterised in that**
the nut (1) has a chamfer, encircling in a circumferential direction, at its edge region arranged in a manner directed towards the shaft.

6. A bearing arrangement according to any one of the preceding claims,
**characterised in that**
the largest clear inner diameter of the nut (1) in the region of its thread is smaller than or equal to the clear inner diameter of the inner-cylindrical region adjoining the thread of the nut (1), in particular a press fit.

7. A bearing arrangement according to any one of the preceding claims,
**characterised in that**
the outer ring of the first bearing is received in a housing (6),
wherein an outer ring of a second bearing is received in the housing (6),
and/or **in that**
the outer ring of the first bearing is positioned against a step of the housing,
wherein the outer ring of the second bearing is positioned against a step of the housing.

8. A bearing arrangement according to claim 7,
**characterised in that**
the housing (6) is in one part, wherein an internal toothing is formed on the housing (6), or **in that**
the housing (6) is multi-part, wherein the housing (6) has a ring gear with internal toothing.

9. A bearing arrangement according to any one of claims 7 to 8,
**characterised in that**
the inner ring of the second bearing is placed onto the shaft,
in particular wherein the inner ring of the second bearing is positioned against a step formed at the shaft.

10. A bearing arrangement according to any one of claims 7 to 9,
**characterised in that**
those steps which are formed at the housing (6) and against which the outer rings of the two bearings are positioned, are in an axial direction arranged between the first and the second bearing,
wherein the second bearing (5) is in an axial direction arranged between the first bearing (7) and that step which is formed at the shaft and against which the inner ring of the second bearing is positioned.

11. A bearing arrangement according to any one of claims 7 to 10,
**characterised in that**
the first bearing (7) is in an axial direction arranged between the nut (1) and the second bearing (5).

12. A bearing arrangement according to any one of claims 7 to 11,
**characterised in that**
the inner-cylindrical region formed at the nut (1) is in an axial direction arranged between the thread of the nut (1) and the inner ring of the first bearing,
and/or **in that**
the bearing seat (30) formed at the shaft is in an axial direction arranged between the threaded region (32) of the shaft and the second bearing (5).

13. A bearing arrangement according to any one of claims 8 to 12,
**characterised in that**
the shaft is a planet carrier (2) in which there are received and/or connected planet bolts (3) on which planet gears are placed and rotatably mounted, in particular by means of bearings placed onto the planet bolts (3), in particular needle bearings,
wherein the toothings of the planet gears on the one hand engage the internal toothing and on the other hand engage toothing, acting as sun wheel toothing, of a rotatably arranged part, in particular sun wheel.

14. A bearing arrangement according to any one of the preceding claims,
**characterised in that**
the second inner-cylindrical region has a smaller clear inner diameter than the smallest clear inner diameter of the thread of the nut (1) and/or is pressed onto a second outer-cylindrical shaft-region which adjoins the threaded region (32) of the shaft and has a smaller external diameter than the largest external diameter of the threaded region (32) of the shaft.

## Revendications

1. Ensemble palier, comprenant un arbre, un premier palier (7) et un écrou (1), en particulier un écrou d'arbre,
l'écrou (1) présentant un filetage, en particulier un filetage intérieur, qui est vissé sur une région filetée (32) formée sur l'arbre et présentant en particulier un filetage extérieur,
un siège de palier (30) formé sur l'arbre étant adjacent à la région filetée (32),
la bague intérieure du premier palier étant en contact avec le siège de palier (30), la bague intérieure du premier palier étant en particulier enfichée sur le siège de palier (30),
l'écrou (1) venant en contact avec la bague intérieure du premier palier,
la bague intérieure du premier palier étant agencée de manière espacée par rapport à la région filetée (32) de l'arbre,
une région de sortie (31) d'un filetage taillé dans la région filetée (32) de l'arbre étant agencée dans une sous-région du siège de palier adjacente à la région filetée (32),
**caractérisé en ce que**
l'écrou (1) présente une première région, en particulier un siège d'ajustage, de forme cylindrique intérieure adjacente au filetage de l'écrou (1), ladite région étant en contact avec, en particulier étant enfichée sur et/ou pressée contre, le siège de palier (30), en particulier la région de sortie (31),
l'écrou (1) présentant une seconde région cylindrique intérieure, qui est adjacente au filetage de l'écrou (1) et est agencée sur le côté du filetage de l'écrou (1) opposé à la première région de forme cylindrique intérieure.

2. Ensemble palier selon la revendication 1,
**caractérisé en ce que**
le siège de palier (30) est réalisé sous forme de surface cylindrique, en particulier cylindrique extérieure, finement usinée, en particulier usinée par meulage, qui n'est en particulier interrompue que par un renfoncement aboutissant dans la région de sortie (31).

3. Ensemble palier selon l'une quelconque des revendications précédentes,
**caractérisé en ce que**
l'écrou (1) presse contre la bague intérieure du premier palier.

4. Ensemble palier selon l'une quelconque des revendications précédentes,
**caractérisé en ce que**
le siège de palier (30) recouvre une région plus grande que celle de la bague intérieure du premier palier dans la direction axiale, en particulier dans la direction de l'axe de rotation de l'arbre,
le siège de palier (30) étant en particulier plus étendu dans la direction axiale que ne l'est la région de contact entre le siège de palier (30) et la bague intérieure du premier palier.

5. Ensemble palier selon l'une quelconque des revendications précédentes,
**caractérisé en ce que**
l'écrou (1) présente un chanfrein s'étendant dans la direction circonférentielle au niveau de sa région de bord orientée vers l'arbre.

6. Ensemble palier selon l'une quelconque des revendications précédentes,
**caractérisé en ce que**
le plus grand diamètre intérieur libre de l'écrou (1) dans la région de son filetage est inférieur ou égal au diamètre intérieur libre de la région, en particulier du siège d'ajustage, de forme cylindrique intérieure adjacente au filetage de l'écrou (1).

7. Ensemble palier selon l'une quelconque des revendications précédentes,
**caractérisé en ce que**
la bague extérieure du premier palier est logée dans un boîtier (6),
une bague extérieure d'un second palier étant logée dans le boîtier (6),
et/ou **en ce que**
la bague extérieure du premier palier est appliquée contre une marche du boîtier,
la bague extérieure du second palier étant appliquée contre une marche du boîtier.

8. Ensemble palier selon la revendication 7,
**caractérisé en ce que**
le boîtier (6) est réalisé d'un seul tenant, une denture intérieure étant formée au niveau du boîtier (6),
ou **en ce que**
le boîtier (6) est réalisé en plusieurs parties, le boîtier (6) présentant une roue creuse comprenant une roue dentée intérieure.

9. Ensemble palier selon l'une quelconque des revendications 7 à 8,
**caractérisé en ce que**
la bague intérieure du second palier est enfichée sur l'arbre,
la bague intérieure du second palier étant en particulier appliquée contre une marche formée au niveau de l'arbre.

10. Ensemble palier selon l'une quelconque des revendications 7 à 9,
**caractérisé en ce que**
les marches, formées au niveau du boîtier (6) et contre lesquelles sont appliquées les bagues extérieures des deux paliers, sont agencées dans la direction axiale entre les premier et second paliers,
le second palier (5) étant agencé dans la direction axiale entre le premier palier (7) et la marche formée au niveau de l'arbre contre laquelle est appliquée la bague intérieure du second palier.

11. Ensemble palier selon l'une quelconque des revendications 7 à 10,
**caractérisé en ce que**
le premier palier (7) est agencé dans la direction axiale entre l'écrou (1) et le second palier (5).

12. Ensemble palier selon l'une quelconque des revendications 7 à 11,
**caractérisé en ce que**
la région cylindrique intérieure formée sur l'écrou (1) est agencée dans la direction axiale entre le filetage de l'écrou (1) et la bague intérieure du premier palier,
et/ou **en ce que**
le siège de palier (30) formé sur l'arbre est agencé dans la direction axiale entre la région filetée (32) de l'arbre et le second palier (5).

13. Ensemble palier selon l'une quelconque des revendications 8 à 12,
**caractérisé en ce que**
l'arbre est un porte-satellites (2) au sein duquel sont logés et/ou reliés des axes planétaires (3) sur lesquels des engrenages planétaires sont enfichés et montés rotatifs, en particulier au moyen de paliers, en particulier de paliers à aiguilles, enfichés sur les axes planétaires (3),
les dentures des engrenages planétaires étant en prise d'une part avec la denture intérieure et d'autre part avec une denture, faisant office de denture de roue solaire, d'une pièce agencée de manière rotative, en particulier d'une roue solaire.

14. Ensemble palier selon l'une quelconque des revendications précédentes, **caractérisé en ce que**
la seconde région cylindrique intérieure présente un diamètre intérieur libre inférieur au plus petit diamètre intérieur libre du filetage de l'écrou (1) et/ou est pressée sur une seconde région cylindrique extérieure de l'arbre qui est adjacente à la région filetée (32) de l'arbre et présente un diamètre extérieur inférieur au plus grand diamètre extérieur de la région filetée (32) de l'arbre.
